(19) **Europäisches Patentamt / European Patent Office / Office européen des brevets**

(11) **EP 1 258 408 B1**

(12) # EUROPÄISCHE PATENTSCHRIFT

(45) Veröffentlichungstag und Bekanntmachung des Hinweises auf die Patenterteilung:
**01.10.2008 Patentblatt 2008/40**

(51) Int Cl.:
***B60T 8/88*** *(2006.01)*

(21) Anmeldenummer: **02008630.2**

(22) Anmeldetag: **17.04.2002**

(54) **Verfahren und Vorrichtung für die Bestimmung von Offsetwerten durch ein Regressionsverfahren**

Method and device for determining an offset value using a regression method

Procédé et dispositif pour déterminer un décalage au moyen d'un procédé de régression

(84) Benannte Vertragsstaaten:
**DE FR GB IT**

(30) Priorität: **16.05.2001 DE 10123847**
**14.02.2002 DE 10206016**

(43) Veröffentlichungstag der Anmeldung:
**20.11.2002 Patentblatt 2002/47**

(73) Patentinhaber: **ROBERT BOSCH GMBH**
**70442 Stuttgart (DE)**

(72) Erfinder:
- **Winner, Hermann**
  **76467 Bietigheim (DE)**
- **Urban, Werner**
  **71665 Vaihingen/Enz, (DE)**
- **Lueder, Jens**
  **70806 Kornwestheim (DE)**
- **Keller, Frieder**
  **76698 Ubstadt-Weiher (DE)**

(56) Entgegenhaltungen:
DE-A- 19 636 443    US-A- 5 719 790
US-B1- 6 223 107

EP 1 258 408 B1

Printed by Jouve, 75001 PARIS (FR)

**Beschreibung**

Stand der Technik

Die Erfindung geht von einer Vorrichtung bzw. einem Verfahren zur Bestimmung eines korrigierten Offsetwertes aus.

Bei der Adaptiven Geschwindigkeitsregelung ACC (ACC = Adaptive Cruise Control) wird für ein Fahrzeug die Einhaltung eines von der Geschwindigkeit abhängigen Abstands zum vorausfahrenden Fahrzeug geregelt. Durch die DE 197 22 947 C1 ist aus diesem Bereich ein Verfahren bekannt, bei dem unter anderem auch der zukünftige Kursverlauf eines Fahrzeuges mit dem ACC-System in die ACC-Regelung mit einbezogen wird. Hierzu wird der zukünftige Kursbereich wenigstens eines vorausfahrenden Fahrzeuges bestimmt und dann zu allen detektierten Fahrzeugen ein seitlicher Querversatz ermittelt Bei stationären Krümmungsverhältnissen der Fahrbahn, d.h. in einem Geradenstück oder im Bereich der konstanten Krümmung einer Kurve, lässt sich beim bekannten Verfahren auch leicht mit Hilfe eines Gier- oder Drehratensignals der zukünftige Fahrkorridor bestimmen.

Aus der DE 196 36 443 A1 ist ein System zur Überwachung von Sensoren in einem Fahrzeug bekannt. Dieses System enthält Mittel, mit denen wenigstens für zwei Sensoren, ausgehend von wenigstens den von Ihnen erzeugten Signalen, für die Sensoren gleich definierte Vergleichsgrößen ermittelt werden. Ferner enthält das System weitere Mittel, mit denen in Abhängigkeit von den wenigstens ermittelten Vergleichsgrößen, eine Referenzgröße ermittelt wird. Ausgehend von wenigstens der ermittelten Referenzgröße wird in Überwachungsmitteln wenigstens für einen Sensor eine Überwachung durchgeführt. Neben den Überwachungsmitteln enthält das System zusätzlich Mittel, mit denen wenigstens für einen Sensor eine Korrektur des von ihm erzeugten Signals, wenigstens in Abhängigkeit von der Referenzgröße, durchgeführt wird.

Vorteile der Erfindung

Die Erfindung geht aus von einer Vorrichtung sowie von einem Verfahren zur Ermittlung eines Offsetwertes, der den Offset des Ausgangssignals eines Fahrzeugsensors repräsentiert, wobei der Sensor wenigstens eine Bewegung eines Fahrzeugs erfasst und das Ausgangssignal wenigstens zu zwei unterschiedlichen Zeitpunkten ausgewertet wird. Der Kerngedanke der besteht darin,

- dass unabhängig von dem Ausgangssignal ein weiteres Signal ermittelt wird, das die Bewegung des Fahrzeugs ebenfalls repräsentiert und
- dass Mittel vorgesehen sind, mittels derer zur Ermittlung des Offsetwertes der fahrzeuglängsgeschwindigkeitsabhängige Verlauf des Ausgangssignals und der fahrzeuglängsgeschwindigkeitsabhängige Verlauf des weiteren Signals ausgewertet werden.

Dadurch wird eine möglichst genaue Bestimmung des Offsetwertes ermöglicht. Da sich während einer Fahrt die Fahrzeuglängsgeschwindigkeit normalerweise häufig ändert, erweist sich die Auswertung des fahrzeuglängsgeschwindigkeitsabhängigen Verlaufs des Ausgangssignals und des fahrzeuglängsgeschwindigkeitsabhängigen Verlauf des weiteren Signals als vorteilhaft.

Eine vorteilhafte Ausführungsform ist dadurch gekennzeichnet, dass weitere die Fahrzeugbewegung repräsentierende Größen erfasst werden und dass das weitere Signal abhängig von den weiteren, die Fahrzeugbewegung repräsentierenden Größen ermittelt wird. Der Vorteil besteht darin, dass dadurch auf Größen zurückgegriffen werden kann, welche mit hoher Genauigkeit und Robustheit erfassbar sind. Dies kommt unmittelbar der Genauigkeit und Robustheit des erfindungsgemäßen Verfahrens zugute.

Von besonderem Vorteil ist hierbei, wenn es sich bei den weiteren die Fahrzeugbewegung repräsentierenden Größen um die Fahrzeugquerdynamik repräsentierende Größen und/oder um die Raddrehbewegungen wenigstens zweier Fahrzeugräder repräsentierende Drehzahlgrößen handelt.

Von Vorteil ist hierbei, wenn es sich bei den die Fahrzeugquerdynamik repräsentierenden Größen um den Lenkwinkel und/oder die Fahrzeugquerbeschleunigung handelt. Das hängt damit zusammen, dass diese Größen in modernen Fahrzeugen bereits durch Sensoren erfasst werden. Damit ist die Anwendung der Erfindung ohne wesentlichen Aufwand an Sensoren möglich.

Bei dem Fahrzeugsensor handelt es sich um einen Sensor, der wenigstens eine Bewegung eines Fahrzeugs erfasst. Das Ausgangssignal wird dabei zu wenigstens zwei unterschiedlichen Zeitpunkten ausgewertet. Vorteilhafterweise wird zur Ermittlung des Offsetwertes der fahrzeuglängsgeschwindigkeitsabhängige Verlauf des Ausgangssignals ausgewertet. In einer besonderen vorteilhaften Ausprägung wird zur Ermittlung des Offsetwertes der fahrzeuglängsgeschwindigkeitsabhängige Verlauf der Differenz zwischen dem Ausgangssignal und einem aus Radgeschwindigkeiten abgeleiteten Referenzsignal ausgewertet

Beispielsweise kann es sich bei dem Fahrzeugsensor um einen Drehratensensor handeln, welcher die Gierbewegung des Fahrzeugs erfasst. Der ermittelte Offsetwert kann beispielsweise zur automatischen Abstandsregelung und/oder -steuerung (ACC) bei dem Kraftfahrzeug herangezogen werden.

Vorteilhafterweise wird unabhängig von dem Ausgangssignal des Fahrzeugsensors ein weiteres Signal ermittelt, das die Bewegung des Fahrzeugs ebenfalls repräsentiert. Dabei kann insbesondere vorgesehen sein, dass Drehzahlgrößen erfasst werden, die die Raddrehbewegungen wenigstens zweier Fahrzeugräder repräsentieren, und dass das weitere Signal abhängig von diesen Drehzahlgrößen ermittelt wird.

Das Ausgangssignal des Fahrzeugsensors kann vorteilhafterweise mit dem weiteren Signal zu einem Verknüpfungssignal verknüpft werden, wobei insbesondere vorgesehen sein kann, dass die Differenz zwischen den Signalen gebildet wird. Zur Ermittlung des Offsetwertes kann der fahrzeuglängsgeschwindigkeit'sabhängige Verlauf des Verknüpfungssignals ausgewertet werden.

Vorteilhafterweise kann die Ermittlung des Offsetwertes durch die Auswertung mindestens einer Eigenschaft einer Regressionsgeraden in einem x-y-Diagramm erfolgen. In diesem x-y-Diagramm ist entlang einer Achse die Fahrzeuglängsgeschwindigkeit und entlang der anderer Achse das Verknüpfungssignal aufgetragen.

Unter der zumindest einen ausgewerteten Eigenschaft der Regressionsgeraden befindet sich vorteilhafter der Achsenabschnitt an derjenigen Achse, entlang derer die aus den Auswertungen des Ausgangssignals erhaltene Größe aufgetragen ist. Der Achsenabschnitt einer Geraden ist numerisch auf einfache Art und Weise ermittelbar, dadurch wird das Verfahren unkompliziert und robust.

Daneben kann die Steigung der Regressionsgeraden im x-y-Diagramm ermittelt werden und aus der ermittelten Steigung eine weitere die Fahrzeugbewegung beeinflussende Größe ermittelt werden. Auch die Steigung einer Geraden ist mit einfachen Mitteln numerisch ermittelbar.

Aus dem Achsenabschnitt der Regressionsgeraden kann der Offsetwert des Ausgangssignals des Fahrzeugsensors ermittelt werden und aus der Steigung der Regressionsgeraden können Unterschiede in den Radradien der nicht angetriebenen Räder ermittelt werden. Die Ermittlung der Unterschiede in den Radradien bedeutet einen erheblichen Zusatznutzen der vorliegenden Erfindung.

Zeichnung

Ein Ausführungsbeispiel der Erfindung ist in der folgenden Zeichnung dargestellt und in der nachfolgenden Beschreibung näher erläutert.

Die Zeichnung besteht aus den Figuren 1 bis 7.

Fig. 1 zeigt schematisch ein Fahrzeugsteuerungssystem sowie dessen Ein- und Ausgabekanäle. Darin sind die für die vorliegende Erfindung maßgeblichen Funktionen eingezeichnet.

Fig. 2 zeigt eine spezielle Ausprägung der vorliegenden Erfindung für den Fall

- dass der Fahrzeugsensor ein Drehratensensor ist,
- dass die Ermittlung des Offsetwertes des Ausgangssignals des Drehratensensors abhängig vom Ausgangssignal der Drehratensensors selbst sowie von den Ausgangssignalen weiterer Sensoren ist, welche den Lenkradwinkel und die Raddrehzahlen erfassen und
- dass die Ermittlung des Offsetwertes des Ausgangssignals des Drehratensensors durch folgende vier Verfahren erfolgt:

  Stillstandsabgleichsverfahren, Lenkwinkelverfahren, Histogrammverfahren und Regressionsverfahrens.

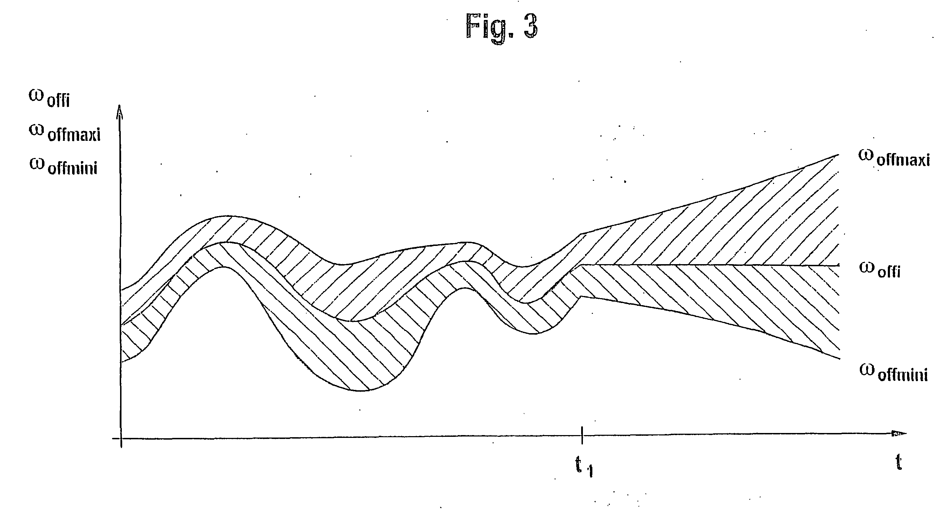

Fig. 3 zeigt in qualitativer Art und Weise den zeitlichen Verlauf eines ermittelten Gierratenoffsets sowie des zugehörigen Fehlerbandes.

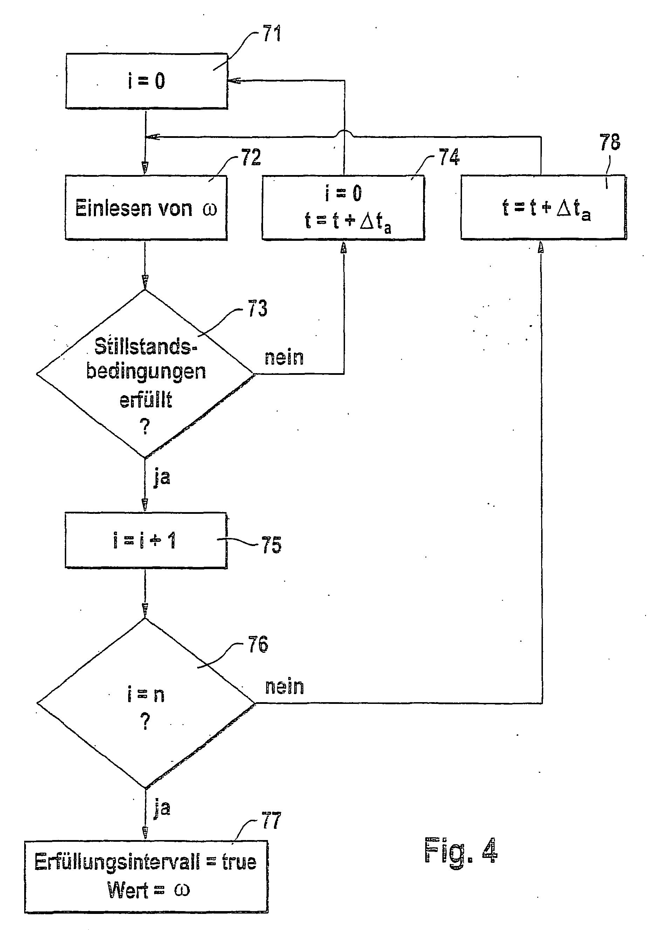

Fig. 4 zeigt in Form eines Flussdiagramms die Ermittlung eines Erfüllungsintervalls. Dieses wird für die Berechnung des Gierratenoffsetwertes mit dem Stillstandsabgleichsverfahren benötigt.

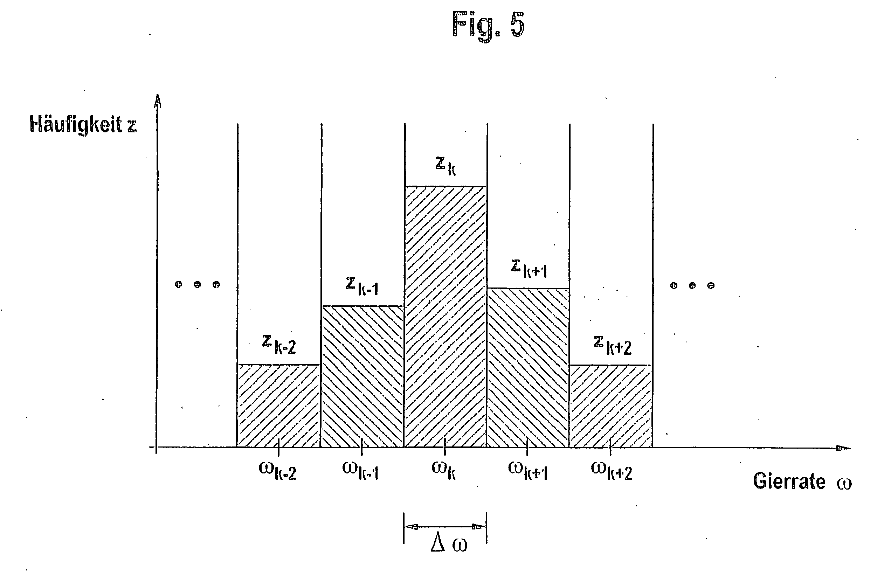

Fig. 5 zeigt in qualitativer Art und Weise ein Histogramm, wie es der Ermittlung des Offsetwertes durch das Histogrammverfahren zugrunde liegt.

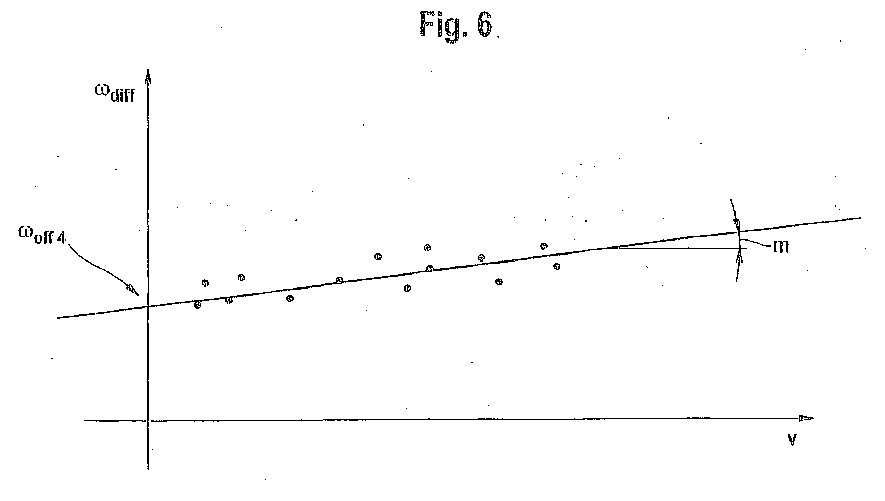

Fig. 6 zeigt in qualitativer Art und Weise eine x-y-Darstellung, wie sie der Ermittlung des Offsetwertes durch das Regressionsverfahren zugrunde liegt.

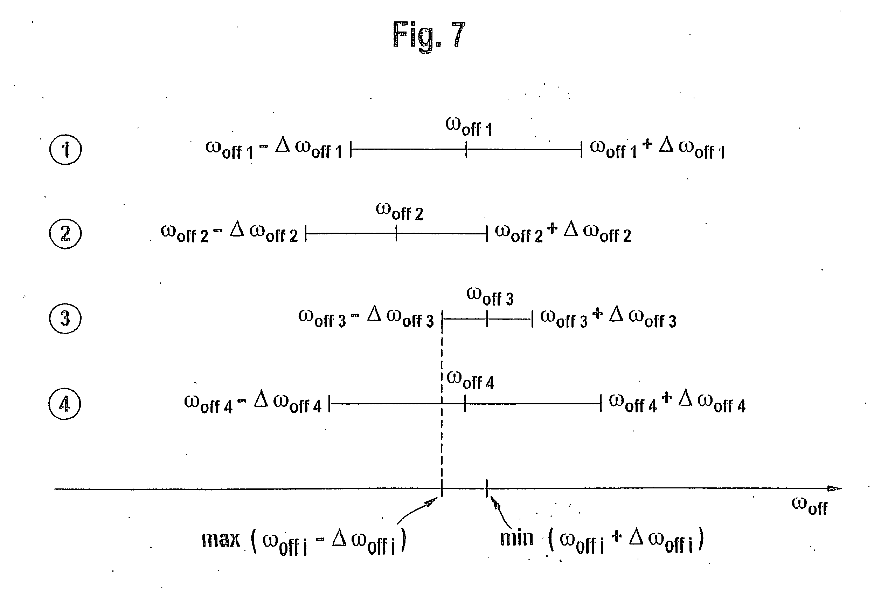

Fig. 7 zeigt in qualitativer Art und Weise für den Fall, dass bei den verschiedenen Verfahren neben dem Offsetwert zusätzlich ein Fehlerband ermittelt wird, wie der korrigierte Offsetwert durch eine Mittelwertbildung zwischen dem Minimum aller Maximalwerte und dem Maximum aller Minimalwerte ermittelt wird.

Ausführungsbeispiel

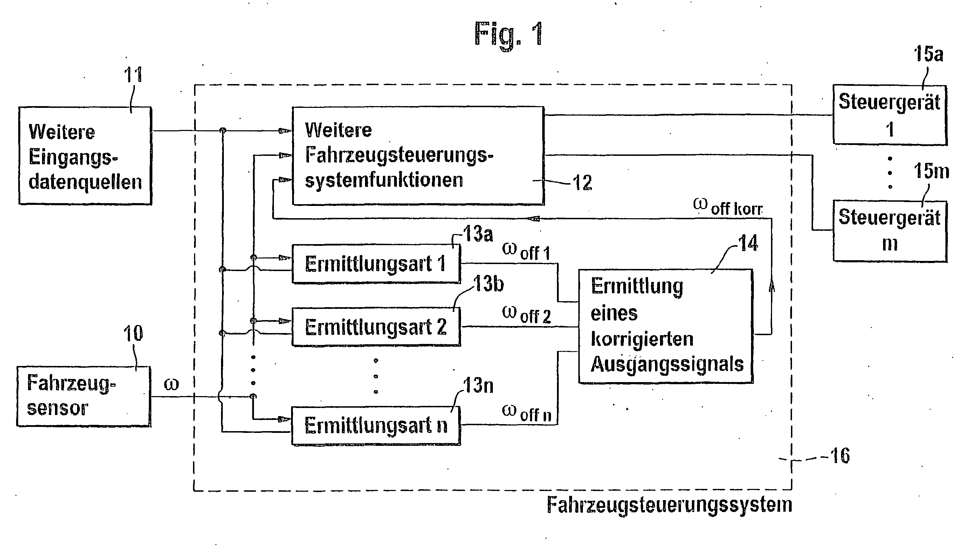

Die Erfindung soll anhand der Figuren 1 bis 7 beschrieben werden. Die spezielle Form des gewählten Ausführungsbeispiels - der Einsatz der erfindungsgemäßen Vorrichtung bzw. des erfindungsgemäßen Verfahrens in einem System zur automatischen Abstandsregelung in einem Kraftfahrzeug - soll keine Einschränkung der erfindungsgemäßen Idee darstellen.

In Fig. 1 sind in schematischer Art und Weise ein Fahrzeugsteuerungsystem 16 sowie die für die Erfindung wesentlichen Ein- und Ausgabekanäle dargestellt. Als Eingangssignale des Fahrzeugsteuerungssystems 16 stehen auf den Eingangskanälen die Ausgangssignale eines Fahrzeugsensors 10 sowie weitere Signale von nicht näher spezifizierten Eingangsdatenquellen 11 zur Verfügung.

Das Fahrzeugsteuerungssystem besteht

- aus den Blöcken 13a,...,13n, welche zur Ermittlung der den Offset des Ausgangssignals des Fahrzeugsensors 10 repräsentierenden Offsetwerte $\omega_{off1}$ ,..., $\omega_{offn}$ dienen,
- aus dem Block 14, in dem aus den in den Blöcken 13a,...,13n ermittelten Offsetwerten $\omega_{off1}$ ,..., $\omega_{offn}$ ein korrigierter Offsetwert $\omega_{offkorr}$ ermittelt wird und
- aus dem Block 12, welcher alle weiteren Funktionen des Fahrzeugsteuerungssystems 16 umfasst.

Die Ausgangssignale des Fahrzeugsteuerungssystems 16 gehen zu den m weiteren Steuergeräten 15a,... 15m. Diese m weiteren Steuergeräte können zum Beispiel in einer speziellen Ausprägung das Motorsteuergerät, das ESP-Steuergerät (ESP = Elektronisches Stabilitäts-Programm) oder die Getriebesteuerung umfassen. Weiterhin denkbar ist, daß die Ausgangssignale des Fahrzeugssteuerungssystems 16 an ein Fahrerinformationssystem weitergeleitet werden

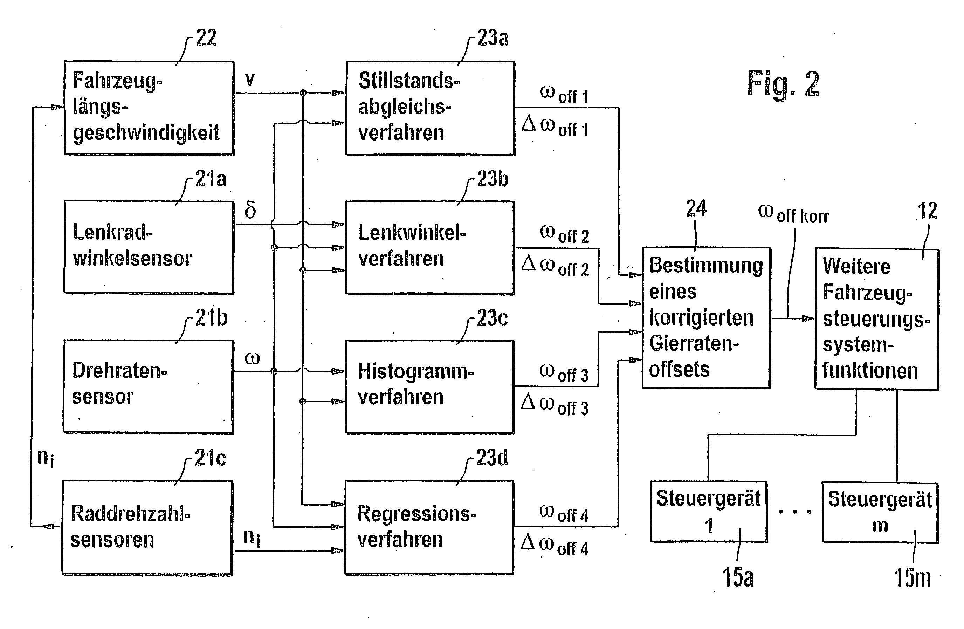

In Fig. 2 ist eine spezielle Ausprägung der vorliegenden Erfindung für den Fall eines Systems zur adaptiven Geschwindigkeitsregelung (ACC) dargestellt. Auch hier sind nur die für die Erfindung wesentlichen Sensoren sowie Ein- und Ausgangskanäle dargestellt. Die Radarsensoren sind beispielsweise nicht dargestellt.

In dieser speziellen Ausprägung ist der Fahrzeugsensor 10 als Drehratensensor 21b ausgebildet. Die weiteren Eingangsquellen 11 sind als Lenkradwinkelsensor 21a und als Raddrehzahlsensoren 21c ausgebildet.

Der Drehratensensor 21b liefert ein Ausgangssignal $\omega$, welches die Gierrate repräsentiert, der Lenkradwinkelsensor 21a liefert ein Ausgangssignal $\delta$, welches den Lenkradwinkel repräsentiert und die Raddrehzahlsensoren 21c liefern Ausgangssignale $n_i$, welche die Radrehzahlen der einzelnen Räder repräsentieren.

Diese Ausgangssignale $\omega$, $\delta$ und $n_i$ sowie das die Fahrzeuglängsgeschwindigkeit repräsentierende Signal v gehen als Eingangssignale in das Fahrzeugsteuerungssystem 16 ein. Die Fahrzeuglängsgeschwindigkeit wird dabei im allgemeinen nicht direkt durch einen Sensor erfasst, sondern wird aus den von den Raddrehzahlsensoren 21c gelieferten Signalen $n_i$, welche die Raddrehzahlen der einzelnen Räder repräsentieren, ermittelt. Diese Ermittlung kann beispielsweise im Steuergerät einer Fahrdynamikregelungsanlage (ESP) erfolgen.

Im Fahrzeugsteuerungssystem 16 erfolgt die Ermittlung des Offsetwertes des Ausgangssignals $\omega$ des Drehratensensors 21b auf folgende vier Arten:

- durch ein Stillstandsabgleichsverfahren 23a,
- durch ein Lenkwinkelverfahren 23b,
- durch ein Histogrammverfahren 23c und
- durch-ein Regressionsverfahren 23d.

Das Stillstandsabgleichsverfahren 23a benötigt als Eingangssignale das die Fahrzeuglängsgeschwindigkeit repräsentrierende Signal v sowie das die Gierrate repräsentierende Signal $\omega$. Der Lenkwinkelverfahren 23b benötigt neben diesen beiden Größen zusätzlich noch das den Lenkradwinkel repräsentierende Signal $\delta$. Als Eingangssignal für das Histogrammverfahren 23c werden das die Gierrate repräsentierende Signal $\omega$ sowie das die Fahrzeuglängsgeschwindigkeit repräsentierende Signal v benötigt. Das Regressionsverfahren 23d benötigt als Eingangssignale die die Radrehzahlen repräsentierenden Signale $n_i$, das die Gierrate repräsentierende Signal $\omega$ sowie das die Fahrzeuglängsgeschwindigkeit repräsentierende Signal v

Als Ausgangssignale liefert das Stillstandsabgleichsverfahren 23a ein Signal $\omega_{off1}$, welches einen Näherungswert für den Gierratenoffset des Drehratensensors 21b repräsentiert sowie ein weiteres Signal $\Delta\omega_{off1}$, welches die halbe Breite des zugehörigen Fehlerbandes repräsentiert. Das Lenkwinkelverfahren 23b liefert ein Signal $\omega_{off2}$, welches einen

Näherungswert für den Gierratenoffset des Drehratensensors 21b repräsentiert sowie ein weiteres Signal $\Delta\omega_{off2}$, welches die halbe Breite des zugehörigen Fehlerbandes repräsentiert. Das Histogrammverfahren 23c liefert ein Signal $\omega_{off3}$, welches den Gierratenoffset des Drehratensensors 21b repräsentiert sowie ein weiteres Signal $\Delta\omega_{off3}$, welches die halbe Breite des zugehörigen Fehlerbandes repräsentiert. Das Regressionsverfahren 23d liefert ein Signal $\omega_{off4}$, welches den Gierratenoffset des Drehratensensors 21b repräsentiert sowie ein weiteres Signal $\Delta\omega_{off4}$, welches die halbe Breite des zugehörigen Fehlerbandes repräsentiert.

Bis jetzt wurde zwischen Signalen und den von den Signalen repräsentierten physikalischen Größen unterscheiden. Der übersichtlicheren Darstellung halber soll im folgenden diese Unterscheidung nicht mehr in aller Strenge beibehalten werden. Insbesondere sollen im folgenden die Größen $\omega$, $\delta$, $n_i$, $v$, $\omega_{off1}$, $\omega_{off2}$, $\omega_{off3}$, $\omega_{off4}$, $\Delta\omega_{off1}$, $\Delta\omega_{off2}$, $\Delta\omega_{off3}$ und $\Delta\omega_{off4}$ nicht mehr nur die Signale, sondern auch die von den Signalen repräsentierten Größen bezeichnen. Zur Unterscheidung dient die Regel, daß der entsprechenden Größe das Wort "Signal" vorangestellt ist, wenn damit das Signal und nicht die physikalische Größe gemeint ist.

Das Fehlerband ist ein Maß für den maximalen absoluten Fehler, mit dem die den Offset des Ausgangssignals des Drehratensensors 21b repräsentierende Größe behaftet ist.

Am Beispiel des Stillstandsabgleichverfahrens bedeutet dies dass der wahre Offsetwert des Gierratensensors mit hoher Wahrscheinlichkeit zwischen den Werten ($\omega_{off1}$-$\Delta\omega_{off1}$) und ($\omega_{off1}$+ $\Delta\omega_{off1}$) liegt. Damit wird auch zugleich der Begriff der "halben Breite $\Delta\omega_{off1}$" anschaulich klar. Entsprechendes gilt auch für die Fehlerbänder bei den anderen drei Verfahren.

Aus diesen Näherungswerten $\omega_{off1}$,...,$\omega_{off4}$ sowie den zugehörigen Breiten der Fehlerbänder wird im Mittel 24, welches eine spezielle Ausgestaltung des Mittels 14 darstellt, ein korrigierter Offsetwert $\omega_{offkorr}$ des Gierratensensors berechnet, welcher sich gegenüber den Größen $\omega_{off1}$,..., $\omega_{off4}$ durch eine erhöhte Genauigkeit auszeichnet.

Dabei ist zu beachten, dass die vier verwendeten Verfahren, nämlich das Stillstandsabgleichsverfahren, dass Lenkwinkelverfahren, das Histogrammverfahren und das Regressionsverfahren jeweils unterschiedliche Gültigkeitsbereiche, abhängig vom Fahrzustand, haben. Das bedeutet dass, abhängig vom Fahrzustand, möglicherweise nicht alle vier verwendeten Verfahren zugleich die den Offsetwert repräsentierenden Größen ermitteln. Bei denjenigen Verfahren, welche momentan keine den Offsetwert repräsentierende Größen ermitteln, wird die zuletzt mit diesem Verfahren ermittelte, gültige, den Offsetwert repräsentierende Größe genommen. Zugleich wird das zu dieser Größe ermittelte Fehlerband zeitlich aufgeweitet. Das bedeutet, dass das zugehörige Fehlerband um so breiter wird, je länger die letzte gültige Ermittlung dieser den Offsetwert repräsentierenden Größe zurückliegt. Dieser Rückgriff auf den zuletzt ermittelten Offsetwert erfordert für jedes Verfahren eine Speicherung von mindestens dem zuletzt ermittelten Offsetwert sowie der zuletzt ermittelten Fehlerbandbreite.

Diese Aufweitung des Fehlerbandes ist in Fig. 3 in qualitativer Art und Weise dargestellt. In diesem x-y-Diagramm ist entlang der Abszisse die Zeit t aufgetragen, in Ordinatenrichtung sind die Größen $\omega_{offi}$, $\omega_{offmini}$ und $\omega_{offmaxi}$ aufgetragen. Dabei kennzeichnet $\omega_{offi}$ den durch das i-te Verfahren ermittelten Offsetwert des Gierratensensors. $\omega_{offmini}$ ist der durch das Fehlerband definierte Minimalwert, d.h. $\omega_{offmini} = \omega_{offi} - \Delta\omega_{offi}$ und $\omega_{offmaxi}$ ist der durch das Fehlerband definierte Minimalwert, d.h. $\omega_{offmaxi} = \omega_{offi} + \Delta\omega_{offi}$. Es soll noch darauf hingewiesen werden, dass es durchaus möglich ist, für die Bestimmung von $\omega_{offmini}$ und $\omega_{offmaxi}$ aus $\omega_{offi}$ unterschiedliche $\Delta\omega_{offi}$ zu verwenden, d.h. $\omega_{offi}$ liegt nicht mehr exakt in der Mitte zwischen $\omega_{offmini}$ und $\omega_{offmaxi}$. Dies kann auch durch die Einführung von Gewichtungsfaktoren erreicht werden, d.h. $\omega_{offmini} = \omega_{offi} - c_1{}^*\Delta\omega A_{offi}$ und $\omega_{offmaxi} = \omega_{offi} + c_2{}^*\Delta\omega_{offi}$. Dabei sind $c_1$ und $c_2$ unterschiedliche Gewichtungsfaktoren, welche konstant sein können, aber auch von Parametern wie beispielsweise der Zeit abhängen können.

Der Gültigkeitsbereich für das i-te Verfahren erstrecke sich von der Zeit t=0 bis zur Zeit t = $t_1$. Für Zeiten t > $t_1$ seien die Gültigkeitsvoraussetzungen nicht mehr erfüllt. Deshalb werden für t > $t_1$ keine weiteren Offsetwerte mehr ermittelt, sondern es wird auf den zur Zeit $t_1$ ermittelten Offsetwert zurückgegriffen. Das Fehlerband, gegeben durch die Werte $\omega_{offmini}$ und $\omega_{offmaxi}$, wird danach für t > $t_1$ kontinuierlich aufgeweitet.

Der ermittelte korrigierte Offsetwert $\omega_{offkorr}$ wird einem weiteren Block 12 zugeleitet, in welchem weitere Funktionen des Fahrzeugsteuerungssystems implementiert sind. Block 12 hat neben anderen nicht in Fig. 2 eingezeichneten Größen auch die Größe $\omega_{offkorr}$ als Eingangssignal.

Im folgenden wird näher auf die Blöcke 23a, 23b, 23c und 23d eingegangen, welche die den Offset des Ausgangssignals des Drehratensensors 21b repräsentierenden Größen $\omega_{off1}$,...,$\omega_{off4}$ liefern.

Das Stillstandsabgleichverfahren 23a stellt unabhängig vom momentanen Bewegungszustand des Fahrzeugs, also insbesondere auch im Falle eines nicht stillstehenden Fahrzeuges, die den Offset des Ausgangssignals des Drehratensensors 21b repräsentierende Größen $\omega_{off1}$ zur Verfügung.

Der Fall des Stillstands wird festgestellt, wenn die folgenden drei Bedingungen a), b) und c) zugleich erfüllt sind:

a) Die Längsgeschwindigkeit des Fahrzeugs ist kleiner als ein erster vorgegebener Maximalwert, welcher als Grenzgeschwindigkeit $v_G$ bezeichnet wird.
b) Die Gierrate $\omega$ ist kleiner als ein zweiter vorgegebener Maximalwert.

c) Die Gierbeschleunigung, das ist die zeitliche Ableitung der Gierrate, ist kleiner als ein dritter vorgegebener Maximalwert.

Bei einer sehr geringen Fahrzeuglängsgeschwindigkeit v können die dann vorliegenden sehr kleinen Raddrehzahlen $n_i$ von den Raddrehzahlsensoren nicht mehr erfasst werden und werden fälschlicherweise als Null erkannt. Dadurch wird in einer im Fahrzeug befindlichen Vorrichtung zur Ermittlung der Fahrzeuglängsgeschwindigkeit diese fälschlicherweise als verschwindend ermittelt. Die Grenzgeschwindigkeit $v_G$ ist diejenige Längsgeschwindigkeit des Fahrzeugs, welche eben noch als nicht verschwindend erkannt wird. Für jede Längsgeschwindigkeit kleiner als die Grenzgeschwindigkeit $v_G$ wird fälschlicherweise die Längsgeschwindigkeit Null ermittelt.

Durch die Punkte b) und c) wird sichergestellt, dass ein Fahrzeug, welches mit verschwindender Längsgeschwindigkeit auf einer drehenden Platte steht, nicht als stillstehend erfasst wird.

Für den Stillstandsabgleich wird das Ausgangssignal $\omega$ des Drehratensensors 21b zu regelmäßigen diskreten Abtastzeitpunkten $t_i$ mit konstanten Zeitabständen $\Delta t_a$ in Block 23a eingelesen. Zugleich wird zu diesen Abtastzeitpunkten $t_i$ geprüft, ob die den Stillstand definierenden Bedingungen a), b) und c) erfüllt sind. Außerdem wird ein Zeitintervall $T_n$ = n·$\Delta t_a$ festgelegt, wobei n eine ganze Zahl größer als 2 ist. Sind die den Stillstand definierenden Bedingungen a), b) und c) während eines Zeitintervalls $T_n$ zu allen in dieses Intervall fallenden Abtastzeitpunkten $t_i$ erfüllt, dann gilt der Stillstandsfall als gegeben. Ein solches Zeitintervall $T_n$, in welchem die den Stillstand definierenden Bedingungen a), b) und c) alle zugleich zu jedem in dieses Intervall fallenden Abtastzeitpunkt erfüllt sind, wird im folgenden als Erfüllungsintervall bezeichnet.

Der Verfahrensablauf zur Detektion eines Erfüllungsintervalls ist in Fig. 4 dargestellt. In Block 71 wird die ganzzahlige Variable i=0 gesetzt. Anschliessend wird in Block 72 das Ausgangssignal $\omega$ des Gierratensensors eingelesen. In Block 73 wird geprüft, ob alle drei Stillstandsbedingungen a), b) und c) zugleich erfüllt sind. Ist dies der Fall, dann wird in Block 75 die Zahl i um 1 inkrementiert. Ist dies nicht der Fall, dann wird in Block 74 i = 0 gesetzt und zugleich zu einem um den Zeitabstand $t_a$ späteren Zeitpunkt erneut mit Block 71 begonnen. Die Variable i gibt die Zahl der ununterbrochenen Erfüllungen aller drei den Stillstand definierenden Bedingungen a), b) und c) an. In Block 76 wird geprüft, ob diese Zahl i der ununterbrochenen Erfüllungen den Wert n erreicht hat. Falls dies der Fall ist, wird im Block 77 durch "Erfüllungsintervall=true" die Detektion eines Erfüllungsintervalls dokumentiert. Zugleich wird der Variablen "Wert" der aktuellste Wert $\omega$ des Ausgangssignals des Gierratensensors zugewiesen. Dabei handelt es sich im Ausführungsbeispiel um einen gefilterten Wert. Hat in Block 76 die Zahl i den Wert n noch nicht erreicht, dann wird zu einem um den Zeitabstand $t_a$ späteren Zeitpunkt (Block 78) erneut in Block 72 das Ausgangssignal des Gierratensensors $\omega$ eingelesen.

Sobald ein Erfüllungsintervall detektiert wurde, ist es vorteilhaft, die Länge der folgenden Zeitintervalle zu verkürzen. An die Stelle des Zeitintervalls $T_n$ tritt jetzt das kürzere Zeitintervall $T_m$ mit der Länge Zeitintervall $T_m$ = m·$\Delta t_a$ wobei m eine ganze Zahl kleiner als n ist. Erst wenn erneut der Fall des Nichtstillstandes detektiert wird, geht man wieder auf das längere Zeitintervall $T_n$ = n·$\Delta t_a$ zurück und behält diese Länge des Zeitintervalls wieder solange bei, bis erneut ein Erfüllungsintervall detektiert wird.

Für die Ermittlung des Offsetwertes $\omega_{off1}$ in Block 23a wird jeweils das letzte abgetastete Signal $\omega$ des vorletzten Erfüllungsintervalls verwendet. Eine Ausnahme bildet hier lediglich das erste Erfüllungsintervall, welches sich auch durch die größere Länge $T_a$ = n·$\Delta t_a$ auszeichnet. Da hier kein direkt vorhergehendes Erfüllungsintervall vorliegt, wird hier für die Ermittlung des Offsetwertes $\omega_{off1}$ in Block 23a das letzte abgetastete Signal $\omega$ in diesem Erfüllungsintervall verwendet. Anstelle des letzten abgetasteten Signals kann dabei auch ein gefiltertes oder gemitteltes oder sowohl gefiltertes als auch gemitteltes Signal verwendet werden.

Zur anschaulichen Erläuterung der Arbeitsweise des Stillstandsabgleichs in Block 23a werde die folgende geradlinige Fahrzeugbewegung mit verschwindender Gierrate und verschwindender Gierbeschleunigung betrachtet:

Phase 1: Das Fahrzeug fährt mit konstanter Längsgeschwindigkeit

Phase 2: Das Fahrzeug beginnt zu bremsen. Die Fahrzeuglängsgeschwindigkeit ist noch größer als die in a) definierte Grenzgeschwindigkeit $v_G$.

Phase 3: Der Bremsvorgang klingt aus. Die Fahrzeuglängsgeschwindigkeit ist bereits kleiner als die Grenzgeschwindigkeit $v_G$.

Phase 4: Das Fahrzeug befindet sich exakt im Stillstand.

Phase 5: Das Fahrzeug beginnt zu beschleunigen. Die Fahrzeuglängsgeschwindigkeit ist noch kleiner als die Grenzgeschwindigkeit $v_G$.

Phase 6: Der Beschleunigungsvorgang ist fortgeschritten. Die Fahrzeuglängsgeschwindigkeit ist größer als die Grenzgeschwindigkeit $v_G$.

In Phase 1 und Phase 2 sind Bedingung a) nicht erfüllt.

Das Fahrzeug befindet sich nicht im Stillstand.

In Phase 3 sind alle drei Bedingungen erfüllt, deshalb wird der Fall des Stillstands angenommen, obwohl das Fahrzeug noch im Ausrollen begriffen war. Um die Weiterverarbeitung der ersten dort ermittelten Signale $\omega$ als den Fahrzeugstillstand repräsentierende Signale zu vermeiden, wurde das Zeitintervall $T_n$ eingeführt.

Die Länge des Zeitintervalls $T_n$ wird durch die erforderliche Berücksichtigung des Ausrollens bei Bremsvorgängen unterhalb der in a) definierten Grenzgeschwindigkeit $v_G$ sowie. die erforderliche Berücksichtigung von Filterlaufzeiten des Signals $\omega$ in Block 23a festgelegt. Idealerweise ist die Länge des Zeitintervalls $T_n$ länger als eine angenommene realistische Dauer der Phase 3 sowie die Filterlaufzeiten. In Phase 4 sind alle 3 Bedingungen a), b) und c) zu allen Abtastzeitpunkten $t_i$ erfüllt.

Deshalb wird, jetzt, jeweils über kürzere Zeitintervalle $T_m$, das Ausgangssignal des Drehratensensors 21b in Block 23a eingelesen und daraus der Gierratenoffset $\omega_{off1}$ aus dem vorletzten Erfüllungsintervall ermittelt.

Auch in Phase 5 sind alle 3 Bedingungen a), b) und c) zu allen Abtastzeitpunkten erfüllt, obwohl das Fahrzeug nicht mehr im Stillstand ist. Der Gierratenoffset $\omega_{off1}$ wird allerdings aus dem vorletzten Erfüllungsintervall ermittelt, welches noch idealerweise in die Phase 4 fällt, in welcher noch ein real stillstehendes Fahrzeug vorlag.

In Phase 6 sind nicht mehr die 3 Bedingungen a), b) und c) zugleich erfüllt, deshalb wird das Fahrzeug als nicht mehr im Stillstand befindlich angenommen und es werden keine weiteren Offsetwerte $\omega_{off1}$ ermittelt. Da sich das Fahrzeug nun in Bewegung befindet, können solange keine weiteren Offsetwerte $\omega_{off1}$ mehr ermittelt werden, bis ein erneuter Fahrzeugstillstand, charakterisiert durch die Erfüllung aller drei Bedingungen a), b) und c), eintritt.

Das Stillstandsabgleichsverfahren arbeitet auch beim nicht als stillstehend detektierten Fahrzeug. Im Fall des nicht als stillstehend detektierten Fahrzeuges wird der zuletzt ermittelte gültige Offsetwert $\omega_{off1}$ aus einem Speicher ausgelesen und weiter verwendet.
Allerdings wird das Fehlerband mit der halben Breite $\Delta\omega_{off1}$ nun zeitlich aufgeweitet. Das bedeutet anschaulich, dass ein umso breiteres Fehlerband angenommen wird, je mehr Zeit seit der letzten gültigen Ermittlung des Offsetwertes $\omega_{off1}$ verstrichen ist.

Im Gegensatz zum Stillstandsabgleichsverfahren arbeitet das Lenkwinkelverfahren nur beim nicht stillstehenden Fahrzeug. Grundlage der Berechnung des Gierratenoffsets beim Lenkwinkelverfahren ist die Beziehung

$$\omega_{LWS} = \frac{1}{i_L \cdot l} \cdot \frac{v}{1 + \dfrac{v^2}{v_{ch}^2}} \cdot \delta \qquad , \qquad (1)$$

welche aus der Fachliteratur bekannt ist (siehe z.B. "Bosch - Kraftfahrtechnisches Taschenbuch", 23. Auflage, Seite 707). Neben der Fahrzeuglängsgeschwindigkeit $v$ und dem Lenkradwinkel $\delta$ gehen in diese Beziehung die Lenkübersetzung $i_L$, eine charakteristische Fahrzeuggeschwindigkeit $v_{ch}$ und der Radstand 1 ein. Mit Lenkübersetzung ist die mechanische Übersetzung zwischen dem Lenkradwinkel $\delta$ und dem Lenkwinkel der Vorderräder bezeichnet.

Der Offset $\omega_{off2}$ ergibt sich als Differenz zwischen der aus obiger Beziehung (1) berechneten Gierrate $\omega_{LWS}$ und der vom Gierratensensor gemessenen Gierrate $\omega$.
Neben der Berechnung eines Offsetwertes $\omega_{off2}$ erlaubt Beziehung (1) auch die Berechnung der Breite eines Fehlerbandes über das Fehlerförtpflanzungsgesetz.

Das in Fig. 5 dargestellte Histogrammverfahren beruht auf einer statistischen Auswertung der durch den Drehratensensor 21b gelieferten Gierratensignale $\omega$. Dabei werden nur diskrete Gierratenwerte ..., $\omega_{k-1}$, $\omega_k$, $\omega_{k+1}$,... mit konstanten diskreten Abständen $\Delta\omega$ betrachtet. Es ist also $\omega_{k-1} = \omega_k - \Delta\omega$ und $\omega_{k+1} = \omega_k + \Delta\omega$. Jedem dieser diskreten Gierratenwerte wird ein Intervall der Breite $\Delta\omega$, in dessen Mitte der diskrete Gierratenwert liegt, zugeordnet. Zum Gierratenwert $\omega_k$ gehört damit das Intervall mit der unteren Grenze $\omega_k - \Delta\omega/2$ und der oberen Grenze $\omega_k + \Delta\omega/2$. Diese Intervalle werden im folgenden als Klassen bezeichnet.

Alle durch den Drehratensensor 21b gemessenen Werte der Gierrate werden nun der zugehörigen Klasse zugeordnet. Damit erhält man das in Fig. 5 dargestellte Histogramm, welche auf der x-Achse die Klassen angibt und auf der y-Achse die Anzahl der in jede Klasse fallenden Gierratenwerte. Der Gierratenoffsetwert $\omega_{off3}$ kann aus diesem Histogramm auf verschiedene Arten bestimmt werden:

a) der Mittelwert der Klasse mit dem höchsten Zählerstand wir als Gierratenoffset weitergegeben oder

b) Der Gierratenoffset wird durch die Bildung eines gewichteten Mittelwertes aus der Klasse mit dem höchsten Zählerstand und den jeweils n benachbarten Klassen auf der linken und auf der rechten Seite gebildet. Dies geschieht durch die Beziehung

$$\omega_{off3} = \frac{\sum\limits_{i=k-n}^{i=k+n} z_i \omega_i}{\sum\limits_{i=k-n}^{i=k+n} z_i}$$

Dabei ist k der Index der Klasse mit dem höchsten Zählerstand, $\omega_i$ der Gierratenmittelwert der durch den Index i gekennzeichneten Klasse und $z_i$ der Zählerstand der durch den Index i gekennzeichneten Klasse.

c) Der Gierratenoffset wird durch die Bildung eines gewichteten Mittelwertes über alle Klassen gebildet. Dies kann durch eine lineare Berücksichtigung der Zählerstände mit

$$\omega_{off3} = \frac{\sum\limits_{alle\ i} z_i \cdot \omega_i}{\sum\limits_{alle\ i} z_i}$$

oder durch eine quadratische Berücksichtigung der Zählerstände mit

$$\omega_{off3} = \frac{\sum\limits_{alle\ i} z_i^2 \cdot \omega_i}{\sum\limits_{alle\ i} z_i}$$

erfolgen. Die quadratische Berücksichtigung der Zählerstände eignet sich insbesondere zur Unterdrückung von auftretenden Nebenmaxima der Gierrate im Histogramm.

Das Fehlerband kann beispielsweise als umso schmaler bestimmt werden, je ausgeprägter das Maximum des Histogramms ist.

Beim Histogrammverfahren empfiehlt es sich, für die Betrachtung lediglich Gierratenwerte bis zu einem vorzugebenden maximalen Betragswert zu betrachten. Weiterhin sollten aus dem Histogrammverfahren lediglich dann Offsetwerte ermittelt werden, wenn die Fahrzeuglängsgeschwindigkeit eine vorzugebende Größe überschreitet. Sollten diese Bedingungen nicht erfüllt sein, dann wird für das Histogrammverfahren der damit zuletzt ermittelte gültige Offsetwert verwendet, wobei sich das zugeordnete Fehlerband mit wachsendem zeitlichem Abstand aufweitet. Da das Histogrammverfahren ein statistisches Verfahren ist, benötigt es eine genügend große Anzahl von Meßwerten. Deshalb werden bei einem Start des Fahrzeuges die Histogrammwerte des letzten Zündungszyklus als Initialisierungswerte eingelesen.

Die Auffüllung der einzelnen Klassen im Histogramm kann beispielsweise durch einfaches Aufsummieren der Anzahl der den einzelnen Klassen zuzuordnenden Gierratenwerte erfolgen. Im Ausführungsbeispiel erfolgt die Auffüllung der einzelnen Klassen im Histogramm allerdings nicht durch einfaches Aufsummieren der Anzahl der den einzelnen Klassen zuzuordnenden Gierratenwerte, sondern durch Tiefpassfilterung mit Exponentialcharakteristik. Die Werte $z_i$ bewegen sich dadurch stets zwischen 0 und dem Filtereingangswert $z_{FE}$, welcher beispielsweise $z_{FE} = 1$ sein kann. $z_i = 0$ bedeutet eine leere Klasse. Nimmt $z_i$ den Filtereingangswert $z_{FE}$, also beispielsweise $z_{FE} = 1$ an, bedeutet dies unendlich viele Einträge in dieser Klasse. Der Zählerstand $z_i = Z_{FE}$ in einer Klasse, also z.B. $z_{FE} = 1$, kann damit niemals erreicht werden, es können lediglich Werte beliebig nahe dem Filtereingangswert, also z.B. 1, erreicht werden. Dadurch wird ein Überlaufen der Klassen bei zu vielen Einträgen vermieden.

Fig. 6 zeigt qualitativ ein mit dem Regressionsverfahren erhaltenes xy-Diagramm. Auf der x-Achse ist dabei die Fahrzeuglängsgeschwindigkeit v und auf der y-Achse eine Größe $\omega_{diff}$ aufgetragen. Diese Größe $\omega_{diff}$ ergibt sich

durch $\omega_{diff} = \omega - \omega_{comp}$. Dabei ist $\omega$ die vom Drehratensensor gemessene Gierrate und $\omega_{comp}$ eine aus den Raddrehzahlen ermittelte Gierrate, gegeben durch

$$\omega_{comp} = \frac{\dfrac{v_r}{r + \Delta r_r} \cdot r - \dfrac{v_l}{r + \Delta r_l} \cdot r}{b} \quad.$$

Dabei sind $v_l$ und $v_r$ die tatsächlichen Radgeschwindigkeiten am linken und rechten Rad der nicht angetriebenen Achse, r ist der Nominalwert des Radradius, $r + \Delta r_l$ ist der tatsächliche Radius des linken Rades der nicht angetriebenen Achse, $r + \Delta r_r$ ist der tatsächliche Radius des rechten Rades der nicht angetriebenen Achse, b ist die Spurbreite. Die Größe $\omega_{comp}$ kann selbstverständlich nicht nur aus den Raddrehzahlen ermittelt werden. Es ist durchaus denkbar, die Größe $\omega_{comp}$ aus Beziehungen zu ermitteln, in welche beispielsweise die Fahrzeugquerbeschleunigung und/oder der Lenkwinkel eingehen.

Diese Ermittlung von $\omega_{comp}$ beruht darauf, daß während einer Kurvenfahrt unterschiedliche Raddrehzahlen der Innen- und Außenräder vorliegen.

Durch analytische Betrachtungen läßt sich zeigen, dass zwischen $\omega_{diff}$ und v näherungsweise ein linearer Zusammenhang $\omega_{diff} = \omega_{off} + m*v$ besteht. Dabei kennzeichnet $\omega_{off}$ den y-Achsendurchstoßpunkt und m die Steigung, welche zudem von den Radradien und der Spurbreite abhängt. Für die Steigung m gilt näherungsweise die Formel

$$m = \frac{1}{b} \cdot \left( \frac{\Delta r_r}{r} - \frac{\Delta r_l}{r} \right) \quad. \qquad (2)$$

Zu diskreten Zeitpunkten wird durch Messung von v und Ermittlung von $\omega_{diff}$ jeweils ein neuer Punkt in das xy-Diagramm eingetragen. Durch diese Punkte wird nun eine Regressionsgerade gelegt. Von dieser Regressionsgeraden werden der y-Achsendurchstoßpunkt und die Steigung m ermittelt. Der y-Achsendurchstoßpunkt stellt den Gierraten-offset $\omega_{off4}$ dar und aus der Steigung m lassen sich über die Gleichung (2) Unterschiede in den Radradien der nicht angetriebenen Räder ermitteln. Diese Unterschiede können durch Reifentoleranzen bedingt sein. Die Ermittlung dieser Unterschiede kann zur Einsparung eines Reifentoleranzabgleiches führen.

Hat die Steigung m den Wert Null, dann haben die nicht angetriebenen Räder dieselben Radradien.

Da die Berechnung von $\omega_{comp}$ nur für schlupffreie Räder gilt, sollten beim Regressionsverfahren die Räder der nicht angetriebenen Achse betrachtet werden.

Voraussetzung für die Gültigkeit des Regressionsverfahrens sind die folgenden drei Bedingungen:

    1) Die Fahrzeuglängsgeschwindigkeit ist größer als eine vorgegebene Grenzgeschwindigkeit
    2) Die Gierrate $\omega$ ist kleiner als eine vorgegebene Grenzgierrate
    3) Die Fahrzeugquerbeschleunigung $a_y$ ist kleiner als eine vorgegebene Grenzquerbeschleunigung

Durch Punkt 1) wird sichergestellt, dass das Regressionsverfahren nicht bei Fahrzeugstillstand arbeitet. Durch die Punkte 2) und 3) wird sichergestellt, dass sich das Fahrzeug nicht in einem fahrdynamischen Grenzbereich bewegt.

Das Regressionsverfahren erfordert eine Geschwindigkeitsvariation. Ist diese Geschwindigkeitsvariation zu gering, d.h. die Punkte im xy-Diagramm liegen in x-Achsenrichtung zu gedrängt, dann wird das Ergebnis ungenau. Das Fehlerband berücksichtigt beispielsweise die Varianz und den Mittelwert der Werte der Fahrzeuglängsgeschwindigkeit.

Aus den ermittelten Offsetwerten $\omega_{off1},...,\omega_{off4}$ sowie den zugehörigen Fehlerbändern mit den halben Breiten $\Delta\omega_{off1},...,\Delta\omega_{off4}$ wird in Block 24 ein korrigierter Offsetwert $\omega_{offkorr}$ ermittelt.

Die Ermittlung des korrigierten Offsetwertes kann auf verschiedene Arten erfolgen. Beispielsweise kann, wie in Fig. 7 dargestellt, der korrigierte Offsetwert als Mittelwert vom Minimum der Maximalwerte und vom Maximum der Minimalwerte ermittelt werden. Dazu werden aus dem durch das i-te Verfahren ermittelten Offsetwert $\omega_{offi}$ sowie dem zugehörigen Fehlerband mit der halben Breite $\Delta\omega_{offi}$ ein Minimalwert $\omega_{offi} - \Delta\omega_{offi}$ und ein Maximalwert $\omega_{offi} + \Delta\omega_{offi}$

berechnet. Nun werden entlang der ω-Achse die Minimal- und Maximalwerte aller 4 Verfahren aufgetragen. Unter den 4 aufgetragenen Minimalwerten wird der größte Minimalwert (in Fig. 7 gekennzeichnet max ($\omega_{offi}$-$\Delta\omega_{offi}$)) ermittelt. Ebenso wird unter den 4 aufgetragenen Maximalwerten der kleinste Maximalwert (in Fig. 7 gekennzeichnet min ($\omega_{offi}$ + $\Delta\omega_{offi}$)) ermittelt. Für den Fall, dass der größte Minimalwert kleiner als der kleinste Maximalwert ist, existiert eine gemeinsame Schnittmenge aller 4 Verfahren mit dem größten Minimalwert als unterer Grenze und dem kleinsten Maximalwert als oberer Grenze.

Durch die Mittelwertbildung zwischen dem Minimum aller Maximalwerte und dem Maximum aller Minimalwerte wird der Mittelpunkt der Schnittmenge ermittelt und als korrigierter Offsetwert $\omega_{offkorr}$ verwendet. Dieses. Verfahren ist auch für den Fall anwendbar, dass keine gemeinsame Schnittmenge existiert, d.h. dass der größte Minimalwert größer als der kleinste Maximalwert ist.

Alternativ kann der korrigierte Offsetwert auch durch eine gewichtete Mittelwertbildung aus allen vier ermittelten Offsetwerten gewonnen werden. Hierbei ist es vorteilhaft, dass bei der gewichteten Mittelwertbildung das Gewicht desjenigen Offsetwertes am größten ist, dessen Fehlerbandbreite am kleinsten ist. Dies kann zum Beispiel durch die folgende gewichtete Mittelwertbildung geschehen:

$$\omega_{offkorr} = \frac{\sum_{i=1}^{4}(\frac{\omega_{off\,i}}{\Delta\omega_{off\,i}})}{\sum_{i=1}^{4}(\frac{1}{\Delta\omega_{off\,i}})}.$$

Die Ermittlung des korrigierten Offsetwertes des Drehratensensors sollte in regelmäßigen oder auch in nicht regelmäßigen Zeitabständen wiederholt werden. Dabei erweisen sich in der Praxis Zeitabstände der Größenordnung 0.1 Sekunden bis 1 Sekunde als vorteilhaft.

**Patentansprüche**

1. Vorrichtung zur Ermittlung eines Offsetwertes ($\omega_{off4}$), der den Offset des Ausgangssignals eines Fahrzeugsensors (21b) repräsentiert, wobei der Sensor wenigstens eine Bewegung eines Fahrzeugs erfasst und das Ausgangssignal (ω) wenigstens zu zwei unterschiedlichen Zeitpunkten ausgewertet wird **dadurch gekennzeichnet,**

   - **dass** unabhängig von dem Ausgangssignal ein weiteres Signal ($\omega_{comp}$) ermittelt wird, das die Bewegung des Fahrzeugs ebenfalls repräsentiert und
   - **dass** Mittel (23d) vorgesehen sind, mittels derer zur Ermittlung des Offsetwertes ($\omega_{off4}$) der fahrzeuglängsge-schwindigkeitsabhängige Verlauf des Ausgangssignals (ω) und der fahrzeuglängsgeschwindigkeitsabhängige Verlauf des weiteren Signals ($\omega_{comp}$) ausgewertet werden.

2. Vorrichtung nach Anspruch 1, **dadurch gekennzeichnet, dass** weitere die Fahrzeugbewegung repräsentierende Größen erfasst werden und dass das weitere Signal ($\omega_{comp}$) abhängig von den weiteren, die Fahrzeugbewegung repräsentierenden Größen ermittelt wird.

3. Vorrichtung nach Anspruch 2, **dadurch gekennzeichnet dass** es sich bei den weiteren die Fahrzeugbewegung repräsentierende Größen um die Fahrzeugquerdynamik repräsentierende Größen und/oder um die Raddrehbewegungen wenigstens zweier Fahrzeugräder repräsentierende Drehzahlgrößen ($n_i$) handelt.

4. Vorrichtung nach Anspruch 3, **dadurch gekennzeichnet dass** es sich bei den die Fahrzeugquerdynamik repräsentierenden Größen um den Lenkwinkel und/oder die Fahrzeugquerbeschleunigung handelt.

5. Vorrichtung nach Anspruch 1, **dadurch gekennzeichnet, dass** der Fahrzeugsensor (21b) die Gierbewegung des Fahrzeugs erfasst.

6. Vorrichtung nach Anspruch 5, **dadurch gekennzeichnet, dass** der ermittelte Offsetwert ($\omega_{off4}$) zur automatischen Abstandsregelung und/oder -steuerung (ACC) bei einem Kraftfahrzeugs (ACC) herangezogen wird.

**7.** Vorrichtung nach Anspruch 1, **dadurch gekennzeichnet, dass**

- das Ausgangssignal ($\omega$) mit dem weiteren Signal ($\omega_{comp}$) zu einem Verknüpfungssignal ($\omega_{diff}$) verknüpft wird, wobei insbesondere vorgesehen ist, dass die Differenz ($\omega_{diff}$) zwischen den Signalen gebildet wird, und
- zur Ermittlung des Offsetwertes ($\omega_{off4}$) der fahrzeuglängsgeschwindigkeitsabhängige Verlauf des Verknüpfungssignals ($\omega_{diff}$), insbesondere der Differenz ($\omega_{diff}$), ausgewertet wird.

**8.** Vorrichtung nach Anspruch 7 **dadurch gekennzeichnet, dass** die Ermittlung des Offsetwertes ($\omega_{off4}$) durch die Auswertung mindestens einer Eigenschaft einer Regressionsgeraden in einem x-y-Diagramm,

- entlang dessen einer Achse die Fahrzeuglängsgeschwindigkeit (v) und
- entlang dessen anderer Achse das Verknüpfungssignal ($\omega_{diff}$)

aufgetragen ist, erfolgt.

**9.** Vorrichtung nach Anspruch 8, **dadurch gekennzeichnet, dass** sich unter der zumindest einen ausgewerteten Eigenschaft der Regressionsgeraden in jedem Fall der Achsenabschnitt ($\omega_{off}$) an derjenigen Achse, entlang der die aus den Auswertungen des Ausgangssignals ($\omega$) erhaltene Größe aufgetragen ist, befindet.

**10.** Vorrichtung nach Anspruch 8, **dadurch gekennzeichnet,**

- **dass** die Steigung (m) der Regressiönsgeraden im x-y-Diagramm ermittelt wird und
- **dass** aus der ermittelten Steigung (m) neben dem Offsetwert ($\omega_{off4}$) des Ausgangssignals eine weitere die Fahrzeugbewegung beeinflussende Größe ermittelt wird.

**11.** Vorrichtung nach Ansprüchen 9 und 10, **dadurch gekennzeichnet**

- **dass** aus dem Achsenabschnitt ($\omega_{off}$) der Regressionsgeraden der Offsetwert ($\omega_{off4}$) des Ausgangssignals ($\omega$) des Fahrzeugssensors (21b) und
- **dass** aus der Steigung der Regressionsgeraden (m) Unterschiede in den Radradien der nicht angetriebenen Räder ermittelt werden.

**12.** Verfahren zur Ermittlung eines Offsetwertes ($\omega_{off4}$), der den Offset des Ausgangssignals ($\omega$) eines Fahrzeugsensors (21b) repräsentiert, wobei der Sensor (21b) wenigstens eine Bewegung eines Fahrzeugs erfasst und das Ausgangssignal ($\omega$) wenigstens zu zwei unterschiedlichen Zeitpunkten ausgewertet wird, **dadurch gekennzeichnet**

- **dass** unabhängig von dem Ausgangssignal ein weiteres Signal ($\omega_{comp}$) ermittelt wird, das die Bewegung des Fahrzeugs ebenfalls repräsentiert und
- **dass** Mittel (23d) vorgesehen sind, mittels derer zur Ermittlung des Offsetwertes ($\omega_{off4}$) der fahrzeuglängsgeschwindigkeitsabhängige Verlauf des Ausgangssignals ($\omega$) und der fahrzeuglängsgeschwindigkeitsabhängige Verlauf des weiteren Signals ($\omega_{comp}$) ausgewertet werden.

**13.** Verfahren nach Anspruch 12, **dadurch gekennzeichnet, dass**

- das Ausgangssignal ($\omega$) mit dem weiteren Signal ($\omega_{comp}$) zu einem Verknüpfungssignal ($\omega_{diff}$) verknüpft wird, wobei insbesondere vorgesehen ist, dass die Differenz ($\omega_{diff}$) zwischen den Signalen gebildet wird, und
- zur Ermittlung des Offsetwertes ($\omega_{off4}$) der fahrzeuglängsgeschwindigkeitsabhängige Verlauf des Verknüpfungssignals ($\omega_{diff}$), insbesondere der Differenz ($\omega_{diff}$), ausgewertet wird.

**14.** Verfahren nach Anspruch 13, **dadurch gekennzeichnet, dass** die Ermittlung des Offsetwertes ($\omega_{off4}$) durch die Auswertung mindestens einer Eigenschaft einer Regressionsgeraden in einem x-y-Diagramm,

- entlang dessen einer Achse die Fahrzeuglängsgeschwindigkeit (v) und
- entlang dessen anderer Achse das Verknüpfungssignal ($\omega_{diff}$)

aufgetragen ist, erfolgt.

**Claims**

1. Device for determining an offset value ($\omega_{off4}$) which represents the offset of the output signal of a vehicle sensor (21b), wherein the sensor senses at least one movement of a vehicle and the output signal ($\omega$) is evaluated at at least two different times,
   **characterized**

   - **in that,** independently of the output signal, a further signal ($\omega_{comp}$) is determined which also represents the movement of the vehicle, and
   - **in that** means (23d) are provided by means of which, in order to determine the offset value ($\omega_{off4}$), the vehicle-longitudinal-velocity-dependent profile of the output signal ($\omega$) and the vehicle-longitudinal-velocity-dependent profile of the further signal ($\omega_{comp}$) are evaluated.

2. Device according to Claim 1, **characterized in that** further variables which represent the movement of the vehicle are sensed, and **in that** the further signal ($\omega_{comp}$) is determined as a function of the further variables which represent the movement of the vehicle.

3. Device according to Claim 2, **characterized in that** the further variables which represent the movement of the vehicle are the variables which represent the lateral dynamics of the vehicle and/or rotational speed variables ($n_i$) which represent the rotational movements of at least two vehicle wheels.

4. Device according to Claim 3, **characterized in that** the variables which represent the lateral dynamics of the vehicle are the steering angle and/or the lateral acceleration of the vehicle.

5. Device according to Claim 1, **characterized in that** the vehicle sensor (21b) senses the yaw movement of the vehicle.

6. Device according to Claim 5, **characterized in that** the offset value ($\omega_{off4}$) which is determined is used for automatic closed-loop and/or open-loop inter-vehicle distance control (ACC) in a vehicle (ACC).

7. Device according to Claim 1, **characterized in that**

   - the output signal ($\omega$) is logically combined with the further signal ($\omega_{comp}$) to form a logic combination signal ($\omega_{diff}$), wherein there is, in particular, provision that the difference ($\omega_{diff}$) between the signals is formed, and
   - in order to determine the offset value ($\omega_{off4}$), the vehicle-longitudinal-velocity-dependent profile of the logic combination signal ($\omega_{diff}$), in particular the difference ($\omega_{diff}$), is evaluated.

8. Device according to Claim 7, **characterized in that** the offset value ($\omega_{off4}$) is determined by evaluating at least one property of a regression line in an x-y diagram,

   - along one of the axes of which the longitudinal velocity (v) of the vehicle is plotted, and
   - along the other axis of which the logic combination signal ($\omega_{diff}$) is plotted.

9. Device according to Claim 8, **characterized in that** in each case the axis section ($\omega_{off}$) under the at least one evaluated property of the regression line is located on the axis along which the variable which is obtained from the evaluations of the output signal ($\omega$) is plotted.

10. Device according to Claim 8, **characterized**

    - **in that** the gradient (m) of the regression line is determined in the x-y diagram, and
    - **in that**, in addition to the offset value ($\omega_{off4}$) of the output signal, a further variable which influences the movement of the vehicle is determined from the gradient (m) which is determined.

11. Device according to Claims 9 and 10, **characterized**

    - **in that** the offset value ($\omega_{off4}$) of the output signal ($\omega$) of the vehicle sensor (21b) is determined from the axis section ($\omega_{off}$) of the regression line, and
    - **in that** differences in the wheel radii of the nondriven wheels are determined from the gradient of the regression line (m).

**12.** Method for determining an offset value ($\omega_{off4}$) which represents the offset of the output signal ($\omega$) of a vehicle sensor (21b), wherein the sensor (21b) senses at least one movement of a vehicle and the output signal ($\omega$) is evaluated at at least two different times, **characterized**

- **in that,** independently of the output signal, a further signal ($\omega_{comp}$) is determined which also represents the movement of the vehicle, and
- **in that** means (23d) are provided by means of which, in order to determine the offset value ($\omega_{off4}$), the vehicle-longitudinal-velocity-dependent profile of the output signal ($\omega$) and the vehicle-longitudinal-velocity-dependent profile of the further signal ($\omega_{comp}$) are evaluated.

**13.** Method according to Claim 12, **characterized in that**

- the output signal ($\omega$) is logically combined with the further signal ($\omega_{comp}$) to form a logic combination signal ($\omega_{diff}$), wherein there is, in particular, provision that the difference ($\omega_{diff}$) between the signals is formed, and
- in order to determine the offset value ($\omega_{off4}$), the vehicle-longitudinal-velocity-dependent profile of the logic combination signal ($\omega_{diff}$), in particular the difference ($\omega_{diff}$), is evaluated.

**14.** Method according to Claim 13, **characterized in that** the offset value ($\omega_{off4}$) is determined by evaluating at least one property of a regression line in an x-y diagram,

- along one of the axes of which the longitudinal velocity (v) of the vehicle is plotted, and
- along the other axis of which the logic combination signal ($\omega_{diff}$) is plotted.

## Revendications

**1.** Dispositif pour déterminer une valeur de décalage ($\omega_{off4}$) représentant le décalage du signal de sortie d'un capteur de véhicule (21b), le capteur détectant au moins un mouvement d'un véhicule et le signal de sortie ($\omega$) est exploité à au moins deux instants différents,
**caractérisé en ce que**

- indépendamment du signal de sortie, on détermine un autre signal ($\omega_{comp}$) représentant également le mouvement du véhicule, et
- des moyens (23d) sont prévus pour exploiter l'évolution du signal de sortie ($\omega$) en fonction de la vitesse longitudinale du véhicule et l'évolution de l'autre signal ($\omega_{comp}$) dépendant de la vitesse longitudinale du véhicule pour déterminer la valeur de décalage ($\omega_{off4}$).

**2.** Dispositif selon la revendication 1,
**caractérisé en ce qu'**
on saisit d'autres grandeurs représentant le mouvement du véhicule et on détermine l'autre signal ($\omega_{comp}$) en fonction des autres grandeurs représentant le mouvement du véhicule.

**3.** Dispositif selon la revendication 2,
**caractérisé en ce que**
les autres grandeurs représentant le mouvement du véhicule sont des grandeurs représentant la dynamique transversale du véhicule et/ou des grandeurs de vitesse de rotation ($n_i$) représentant les mouvements de rotation d'au moins deux roues du véhicule.

**4.** Dispositif selon la revendication 3,
**caractérisé en ce que**
les grandeurs représentant la dynamique transversale du véhicule sont l'angle de braquage et/ou l'accélération transversale du véhicule.

**5.** Dispositif selon la revendication 1,
**caractérisé en ce que**
le capteur de véhicule (21 b) saisit le mouvement de lacet du véhicule.

**6.** Dispositif selon la revendication 5,

**caractérisé en ce que**
la valeur de décalage ($\omega_{off4}$), déterminée est utilisée pour réguler et/ou commander automatiquement la distance (ACC) d'un véhicule.

7. Dispositif selon la revendication 1,
**caractérisé en ce que**

 - le signal de sortie ($\omega$) est combiné à l'autre signal ($\omega_{comp}$) pour donner un signal combiné ($\omega_{diff}$) et il est notamment prévu de former la différence ($\omega_{diff}$) entre les signaux, et
 - on exploite l'évolution du signal de combinaison ($\omega_{diff}$) dépendant de la vitesse longitudinale du véhicule, notamment la différence ($\omega_{diff}$) pour déterminer la valeur de décalage ($\omega_{off4}$).

8. Dispositif selon la revendication 7,
**caractérisé en ce qu'**
on détermine la valeur de décalage ($\omega_{off4}$) par l'exploitation d'au moins une propriété d'une droite de régression dans un diagramme x-y,

 - dont l'un des axes représente la vitesse longitudinale (v) du véhicule, et
 - l'autre axe représente le signal de combinaison ($\omega_{diff}$).

9. Dispositif selon la revendication 8,
**caractérisé en ce que**
parmi au moins une propriété exploitée sur les droites de régression, dans tous les cas, il y a le segment d'axe ($\omega_{off}$) correspondant à l'axe suivant lequel on représente la grandeur obtenue à partir des exploitations du signal de sortie ($\omega$).

10. Dispositif selon la revendication 8,
**caractérisé en ce qu'**

 - on détermine la pente (m) de la droite de régression dans le diagramme x-y,
 - à partir de la pente (m) déterminée, on détermine une autre grandeur influençant le mouvement du véhicule en plus de la valeur de décalage ($\omega_{off4}$) du signal de sortie.

11. Dispositif selon les revendications 9 et 10,
**caractérisé en ce qu'**

 - à partir du segment d'axe ($\omega_{off}$) de la droite de régression, on détermine la valeur de décalage ($\omega_{off4}$) du signal de sortie ($\omega$) du capteur de véhicule (21 b, et
 - à partir de la pente de la droite de régression (m), on détermine des différences de rayon des roues non motrices

12. Procédé de détermination de la valeur de décalage ($\omega_{off4}$) représentant le décalage du signal de sortie ($\omega$) d'un capteur de véhicule (21b), le capteur (21b) saisissant au moins un mouvement d'un véhicule et le signal de sortie ($\omega$) est exploité à au moins deux instants différents,
**caractérisé en ce qu'**

 - indépendamment du signal de sortie, on détermine un autre signal ($\omega_{comp}$) représentant également le mouvement du véhicule, et
 - des moyens (23d) sont prévus pour exploiter l'évolution du signal de sortie ($\omega$) dépendant de la vitesse longitudinale du véhicule et l'évolution de l'autre signal ($\omega_{comp}$) dépendant de la vitesse longitudinale du véhicule pour déterminer la valeur de décalage ($\omega_{off4}$)

13. Procédé selon la revendication 12,
**caractérisé en ce qu'**

 - on combine le signal de sortie ($\omega$) à l'autre signal ($\omega_{comp}$) pour obtenir un signal de combinaison ($\omega_{diff}$) et il est notamment prévu de former la différence ($\omega_{diff}$) entre les signaux, et
 - on exploite l'évolution du signal de combinaison ($\omega_{diff}$) dépendant de la vitesse longitudinale du véhicule notamment la différence ($\omega_{diff}$), pour déterminer la valeur de décalage ($\omega_{off4}$).

14. Procédé selon la revendication 13,
    **caractérisé en ce qu'**
    on détermine la valeur de décalage ($\omega_{off4}$) par l'exploitation d'au moins une propriété d'une droite de régression dans un diagramme x-y dans lequel,

    - suivant un axe, on représente la vitesse longitudinale (v) du véhicule, et
    - le long de l'autre axe, on représente le signal de combinaison ($\omega_{diff}$).

Fig. 1

Fahrzeugsteuerungssystem

EP 1 258 408 B1

Fig. 2

Fig. 3

$\omega_{offi}$

$\omega_{offmaxi}$

$\omega_{offmini}$

$\omega_{offmaxi}$

$\omega_{offi}$

$\omega_{offmini}$

$t_1$

$t$

EP 1 258 408 B1

Fig. 4

Fig. 5

EP 1 258 408 B1

Fig. 6

# Fig. 7

① $\omega_{off\,1} - \Delta\omega_{off\,1}$ |————————|————————| $\omega_{off\,1} + \Delta\omega_{off\,1}$
$\omega_{off\,1}$

② $\omega_{off\,2} - \Delta\omega_{off\,2}$ |————————|————————| $\omega_{off\,2} + \Delta\omega_{off\,2}$
$\omega_{off\,2}$

③ $\omega_{off\,3} - \Delta\omega_{off\,3}$ |——|——| $\omega_{off\,3} + \Delta\omega_{off\,3}$
$\omega_{off\,3}$

④ $\omega_{off\,4} - \Delta\omega_{off\,4}$ |————————|————————| $\omega_{off\,4} + \Delta\omega_{off\,4}$
$\omega_{off\,4}$

$\omega_{off}$

$\max\left(\omega_{off\,i} - \Delta\omega_{off\,i}\right)$      $\min\left(\omega_{off\,i} + \Delta\omega_{off\,i}\right)$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19722947 C1
- DE 19636443 A1